# EUROPÄISCHE PATENTSCHRIFT

(11) **EP 0 899 304 B1**
(45) Veröffentlichungstag und Bekanntmachung des Hinweises auf die Patenterteilung: **16.03.2005**
(21) Anmeldenummer: 98810795.9
(22) Anmeldetag: 18.08.1998
(51) Int. Cl.: C08L 83/04, C08L 63/00, H01B 3/40

(54) **Hydrophobes Epoxidharzsystem**
Hydrophobic epoxy resin composition
Composition de résines époxydes Hydrophobes

(30) Priorität: 27.08.1997 CH 199797
(43) Veröffentlichungstag der Anmeldung: 03.03.1999
(73) Patentinhaber: Huntsman Advanced Materials (Switzerland) GmbH, 4057 Basel (CH)
(72) Erfinder: Beisele, Christian, 79424 Auggen (DE)
(74) Vertreter: Dannappel, Hans-Jochen, Dr.

(56) Entgegenhaltungen:
- EP-A- 0 676 448
- US-A- 3 926 885
- PATENT ABSTRACTS OF JAPAN vol. 015, no. 094 (E-1041), 6. März 1991 (1991-03-06) & JP 02 305454 A (NITTO DENKO CORP), 19. Dezember 1990 (1990-12-19) -& DATABASE WPI Derwent Publications Ltd., London, GB; AN 1991-039522 XP002172943

## Beschreibung

Die vorliegende Erfindung betrifft eine Zusammensetzung enthaltend ein cycloaliphatisches Epoxidharz und verschiedene Polysiloxane, vernetzte Produkte erhältlich durch Härtung einer solchen Zusammensetzung sowie die Verwendung dieser Zusammensetzung als elektrischer Isolator.

Epoxidharze werden wegen ihrer guten mechanischen Eigenschaften und ihres hohen spezifischen Widerstands häufig als elektrisches Isoliermaterial verwendet. Für Anwendungen im Freien sind cycloaliphatische Epoxidharze wegen ihrer hohen Witterungsbeständigkeit besonders geeignet. Dabei tritt jedoch vor allem in niederschlagsreichen Regionen mit hoher Luftverschmutzung das Problem auf, dass sich auf der Oberfläche des lsolators eine leitfähige Schmutz/Wasser-Schicht ausbilden kann, was zu Ableitströmen und Lichtbögen führt und eine Schädigung des lsolators bis zum Totalausfall zur Folge haben kann. Auch bei wenig verschmutzten Isolatoren auf Epoxidbasis kann es zum Anstieg der Oberflächenleitfähigkeit kommen, wenn die Oberfläche im Lauf der Zeit durch Verwitterung erodiert und das Wasser solch eine angerauhte Schicht besser benetzen kann.

Wie im US-Patent 3,926,885 offenbart, können Epoxidharzen hydrophobe Eigenschaften verliehen werden durch den Zusatz von Polysiloxan/Polyether-Copolymeren und OH-terminierten Polysiloxanen. Allerdings ist die Haftung dieses Materials auf Metall nicht für alle Anwendungen ausreichend.
In der JP-A 2-305454 werden Epoxidharzmischungen mit hoher Feuchtigkeitsstabilität beschrieben, die neben einem Epoxynovolak und einem Phenolharz geringe Mengen eines cyclischen Dimethylsiloxans enthalten. Zwar wird in diesen Zusammensetzungen die durch Bindung von Wasser an der Oberfläche verursachte Korrosion weitgehend verhindert, ein für die Verwendung als Isolator ausreichender Hydrophobie-Effekt wird jedoch mit solchen Systemen nicht erzielt.

Es wurde nun gefunden, dass Zusammensetzungen enthaltend ein cycloaliphatisches Epoxidharz und drei spezifische Polysiloxane lagerstabile Emulsionen mit sehr guten Hydrophobie-Eigenschaften bilden.

Gegenstand der vorliegenden Erfindung ist eine Zusammensetzung enthaltend
(a) ein cycloaliphatisches Epoxidharz,
(b) ein OH-terminiertes Polysiloxan,
(c) ein Polysiloxan/Polyether-Copolymer und
(d) ein cyclisches Polysiloxan.

Die Mengen der Komponenten (a) bis (d) können in den erfindungsgemässen Zusammensetzungen in weiten Bereichen variieren.
Bevorzugt sind Zusammensetzungen enthaltend, bezogen auf die Gesamtzusammensetzung, 94,0-99,7 Gew.-%, insbesondere 94,6-98,5 Gew.-%, der Komponente (a), 0,1-2,0 Gew.-%, insbesondere 0,5-1,8 Gew.-%, der Komponente (b), 0,1-2,0 Gew.-%, insbesondere 0,5-1,8 Gew.-%, der Komponente (c) und 0,1-2,0 Gew.-%, insbesondere 0,5-1,8 Gew.-%, der Komponente (d), wobei die Summe der Komponenten (a), (b), (c) und (d) 100 Gew.-% beträgt.

Der Begriff "cycloaliphatisches Epoxidharz" steht im Rahmen dieser Erfindung für sämtliche Epoxidharze mit cycloaliphatischen Struktureinheiten, d.h. er umfasst sowohl cycloaliphatische Glycidylverbindungen und β-Methylglycidylverbindungen als auch Epoxidharze auf Basis von Cycloalkylenoxiden.

Geeignete cycloaliphatische Glycidylverbindungen und β-Methylglycidylverbindungen sind die Glycidylester und β-Methylglycidylester von cycloaliphatischen Polycarbonsäuren wie Tetrahydrophthalsäure, 4-Methyltetrahydrophthalsäure, Hexahydrophthalsäure, 3-Methylhexahydrophthalsäure und 4-Methylhexahydrophthalsäure.

Weitere geeignete cycloaliphatische Epoxidharze sind die Diglycidylether und β-Methylglycidylether von cycloaliphatischen Alkoholen, wie 1,2-Dihydroxycyclohexan, 1,3-Dihydroxycyclohexan und 1,4-Dihydroxycyclohexan, 1,4-Cyclohexandimethanol, 1,1-Bis(hydroxymethyl)cyclohex-3-en, Bis(4-hydroxycyclohexyl)methan, 2,2-Bis(4-hydroxycyclohexyl)propan und Bis(4-hydroxycyclohexyl)sulfon.

Beispiele für Epoxidharze mit Cycloalkylenoxid-Strukturen sind Bis(2,3-epoxycyclopentyl)ether, 2,3-Epoxycyclopentylglycidylether, 1,2-Bis(2,3-epoxycyclopentyl)ethan, Vinylcyclohexendioxid, 3,4-Epoxycyclohexylmethyl-3',4'-epoxycyclohexancarboxylat, 3,4-Epoxy-6-methylcyclohexylmethyl-3',4'-epoxy-6'methylcyclohexancarboxylat, Bis(3,4-epoxycyclohexylmethyl)adipat und Bis(3,4-epoxy-6-methylcyclohexylmethyl)adipat.

Bevorzugte cycloaliphatische Epoxidharze sind Bis(4-hydroxycyclohexyl)methandiglycidylether, 2,2-Bis(4-hydroxycyclohexyl)propandiglycidylether, Tetrahydrophthalsäurediglycidylester, 4-Methyltetrahydrophthalsäurediglycidylester, 4-Methylhexahydrophthalsäurediglycidylester und insbesondere Hexahydrophthalsäurediglycidylester und 3,4-Epoxycyclohexylmethyl-3'4'-epoxycyclohexancarboxylat.

Die OH-terminierten Polysiloxane gemäss Komponente (b) können nach bekannten Methoden hergestellt werden, beispielsweise durch Hydrolyse der entsprechenden Organochlorsilane und anschliessende Polykondensation der Silanole. Hierbei enstehen in der Regel Polysiloxangemische mit Molekularmassen von 1'000-150'000 g/mol. Eine Reihe solcher OH-terminierten Polysiloxane sind im Handel erhältlich.

In den erfindungsgemässen Zusammensetzungen werden bevorzugt flüssige Polysiloxane verwendet.

Vorzugsweise wird ein Polysiloxan der Formel I eingesetzt 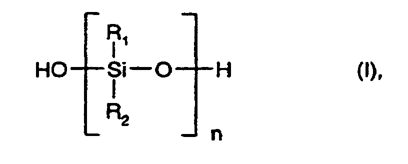 worin R₁ und R₂ unabhängig voneinander C₁-C₁₈-Alkyl, C₅-C₁₄-Aryl oder C₆-C₂₄-Aralkyl bedeuten und n für einen Durchschnittswert von 3 bis 60, insbesondere von 4 bis 20 steht.

Alkyl umfaßt beispielsweise Methyl, Ethyl, lsopropyl, n-Propyl, n-Butyl, Isobutyl, sek.-Butyl, tert.-Butyl sowie die verschiedenen isomeren Pentyl-, Hexyl-, Heptyl-, Octyl-, Nonyl-, Decyl-, Undecyl-, Dodecyl-, Tridecyl-, Tetradecyl-, Pentadecyl-, Hexadecyl-, Heptadecyl-, Octadecyl-, Nonadecyl- und Eicosylgruppen.
Aryl als R₁ oder R₂ enthält bevorzugt 6 bis 10 C-Atome. Es kann sich beispielsweise um Phenyl, Tolyl, Pentalinyl, Indenyl, Naphtyl, Azulinyl und Anthryl handeln.

Aralkyl als R₁ oder R₂ enthält bevorzugt 7 bis 12 C-Atome und besonders bevorzugt 7 bis 10 C-Atome. Es kann sich zum Beispiel um Benzyl, Phenethyl, 3-Phenylpropyl, α-Methylbenzyl, 4-Phenylbutyl oder α,α-Dimethylbenzyl handeln.

Besonders bevorzugt sind Polysiloxane der Formel I, worin R₁ und R₂ unabhängig voneinander Methyl, Ethyl oder Phenyl bedeuten.

Insbesondere bevorzugt als Komponente (b) sind Polysiloxane der Formel I, worin R₁ und R₂ für Methyl stehen.

Bei der Komponente (c) der erfindungsgemässen Zusammensetzungen kann es sich sowohl um lineare als auch um verzweigte Block-Copolymere handeln. Diese Copolymeren können Si-O-C-Verknüpfungen oder Si-C-Verknüpfungen zwischen den Polysiloxan- und den Polyether-Segmenten aufweisen. Copolymere mit Si-O-C-Verknüpfungen können beispielsweise durch Reaktion von Polysiloxanen mit reaktiven Endgruppen (wie z.B. Wasserstoff, Halogen, Alkoxy, Acetyl oder Dialkylamino) und Polyetheralkoholen hergestellt werden.
Copolymere mit Si-C-Verknüpfungen sind beispielsweise durch Hydrosilylierung von Vinyl-Endgruppen enthaltenden Polyethem mit Si-H-Gruppen enthaltenden Siloxanen zugänglich. Von besonderem Interesse sind im Rahmen dieser Erfindung verzweigte Copolymere mit einer Polysiloxan-Hauptkette und linearen Polyether-Seitenketten.

Die erfindungsgemässen Zusammensetzungen enthalten als Komponente (c) vorzugsweise ein Copolymer enthaltend Polydimethylsiloxan als Polysiloxan-Segment.

Weiterhin als Komponente (c) bevorzugt sind Copolymere enthaltend Polyethylenoxid, Polypropylenoxid oder ein Polyethylenoxid/Polypropylenoxid-Copolymer als Polyether-Segment.

Geeignete Polysiloxan/Polyether-Copolymere sind im Handel erhältlich, z.B. NM 4205 (Hüls AG).

Die cyclischen Polysiloxane gemäss Komponente (d) sind dem Fachmann ebenfalls bekannt und können nach bekannten Methoden hergestellt werden.

Vorzugsweise wird als Komponente (d) ein cyclisches Polysiloxan der Formel II eingesetzt 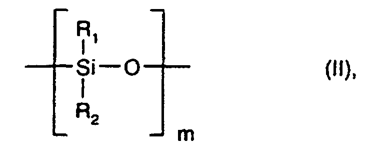 worin R₁ und R₂ unabhängig voneinander C₁-C₁₈-Alkyl, C₅-C₁₄-Aryl oder C₆-C₂₄-Aralkyl bedeuten und m eine ganze Zahl von 4 bis 12 ist.

Bevorzugt als Komponente (d) sind cyclische Polysiloxane der Formel II, worin R₁ und R₂ unabhängig voneinander Methyl, Ethyl oder Phenyl bedeuten und m eine ganze Zahl von 4 bis 6 ist.

Besonders bevorzugt bedeuten R₁ und R₂ Methyl.

Wie in *J. Am. Chem. Soc. 68, 358 (1946)* beschrieben wird, können solche cyclischen Polysiloxane aus dem Produktgemisch isoliert werden, das bei der Hydrolyse der entsprechenden Dialkyl-, Diaryl bzw. Diaralkyldichlorsilane entsteht.

Besonders bevorzugt als Komponente (d) sind die im Handel erhältlichen Verbindungen Octamethylcyclotetrasiloxan, Decamethylcyclopentasiloxan und insbesondere Dodecamethylcyclohexasiloxan.

Die erfindungsgemässen Zusammensetzungen können im Prinzip mit allen üblichen Epoxidhärtem gehärtet werden. Vorzugsweise werden jedoch Anhydridhärter verwendet.

Einen weiteren Erfindungsgegenstand bildet daher eine Zusammensetzung enthaltend die oben angegebenen Komponenten (a) bis (d) und zusätzlich als Komponente (e) ein Polycarbonsäureanhydrid.

Dabei kann es sich um lineare aliphatische polymere Anhydride, wie beispielsweise Polysebacinsäurepolyanhydrid oder Polyazelainsäurepolyanhydrid, oder cyclische Carbonsäureanhydride handeln.

Cyclische Carbonsäureanhydride sind besonders bevorzugt.

Beispiele für cyclische Carbonsäureanhydride sind:
Bernsteinsäureanhydrid, Citraconsäureanhydrid, ltaconsäureanhydrid, alkenyl-substituierte Bemsteinsäureanhydride, Dodecenylbemsteinsäureanhydrid, Maleinsäureanhydrid und Tricarballylsäureanhydrid, Maleinsäureanhydridaddukt an Cyclopentadien oder Methylcyclopentadien, Linolsäureaddukt an Maleinsäureanhydrid, alkylierte Endoalkylentetrahydrophthalsäureanhydride, Methyltetrahydrophthalsäureanhydrid und Tetrahydrophthalsäureanhydrid, wobei von den beiden letzteren die Isomerengemische besonders geeignet sind. Besonders bevorzugt sind Hexahydrophthalsäureanhydrid und Methylhexahydrophthalsäureanhydrid.

Weitere Beispiele für cyclische Carbonsäureanhydride sind aromatische Anhydride, wie beispielsweise Pyromellitsäuredianhydrid, Trimellitsäureanhydrid und Phthalsäureanhydrid.

Auch chlorierte oder bromierte Anhydride, wie z.B. Tetrachlorphthalsäureanhydrid, Tetrabromphthalsäureanhydrid, Dichlormaleinsäureanhydrid und Chlorendic-Anhydrid, können eingesetzt werden.

Die erfindungsgemässen Zusammensetzungen können gegebenenfalls zusätzlich einen Härtungsbeschleuniger (f) enthalten. Geeignete Beschleuniger sind dem Fachmann bekannt. Als Beispiele seien genannt:
Komplexe von Aminen, besonders tertiären Aminen, mit Bortrichlorid oder Bortrifluorid; tertiäre Amine, wie Benzyldimethylamin;
Harnstoffderivate, wie N-4-Chlorphenyl-N',N'-dimethylharnstoff (Monuron);
gegebenenfalls substituierte Imidazole, wie Imidazol oder 2-Phenylimidazol.

Bevorzugte Beschleuniger sind tertiäre Amine, insbesondere Benzyldimethylamin.

Die Komponenten (e) und (f) werden in den üblichen wirksamen, d.h. für die Härtung der erfindungsgemässen Zusammensetzungen ausreichenden, Mengen eingesetzt. Das Verhältnis der Komponenten (a) und (e) und gegebenenfalls (f) hängt von der Art der verwendeten Verbindungen, der erforderlichen Härtungsgeschwindigkeit und den im Endprodukt gewünschten Eigenschaften ab und kann vom Fachmann leicht ermittelt werden. Im allgemeinen werden 0,4 bis 1,6, vorzugsweise 0,8 bis 1,2 Äquivalente Anhydridgruppen pro Epoxidäquivalent eingesetzt.
Das Harzgemisch (a) bis (d) und die Härterkomponente (e), gegebenenfalls zusammen mit dem Beschleuniger (f), werden im allgemeinen getrennt gelagert und erst kurz vor der Applikation gemischt.

Weiterhin können die härtbaren Mischungen Zähigkeitsvermittler ("Toughener") enthalten, wie zum Beispiel Core/Shell-Polymere oder die dem Fachmann als "Rubber Toughener" bekannten Elastomere oder Elastomere enthaltende Pfropfpolymere. Geeignete Zähigkeitsvermittler sind beispielsweise in der EP-A-449 776 beschrieben.

Ausserdem können die härtbaren Mischungen Füllstoffe enthalten, wie beispielsweise Metallpulver, Holzmehl, Glaspulver, Glaskugeln, Halbmetall- und Metalloxide, wie zum Beispiel SiO₂ (Aerosile, Quarz, Quarzmehl, Quarzgutmehl), Aluminiumoxid und Titanoxid, Metallhydroxide, wie Mg(OH)₂, Al(OH)₃ und ALO(OH), Halbmetall- und Metallnitride, wie zum Beispiel Siliziumnitrid, Bornitrid und Aluminiumnitrid, Halbmetall- und Metallcarbide (SiC), Metallcarbonate (Dolomit, Kreide, CaCO₃), Metallsulfate (Baryt, Gips), Gesteinsmehle und natürliche oder synthetische Mineralien hauptsächlich aus der Silikatreihe, wie zum Beispiel Zeolithe (insbesondere Molekularsiebe) Talkum, Glimmer, Kaolin,Wollastonit, Bentonit und andere.

Neben den oben erwähnten Additiven können die härtbaren Gemische weitere übliche Zusatzstoffe enthalten, wie z.B. Antioxidantien, Lichtschutzmittel, Flammschutzmittel, kristallwasserhaltige Füllstoffe, Weichmacher, Farbstoffe, Pigmente, Thixotropiemittel, Zähigkeitsverbesserer, Entschäumer, Antistatika, Gleitmittel und Entformungshilfsmittel.

Die erfindungsgemässen Zusammensetzungen können nach bekannten Methoden mit Hilfe bekannter Mischaggregate, wie beispielsweise Rührer (insbesondere Disperser und Supraton® ), Kneter, Walzen oder Trockenmischem, hergestellt werden. Im Falle von festen Epoxidharzen kann die Dispergierung auch in der Schmelze erfolgen.

Die Härtung der erfindungsgemässen Gemische kann auf bekannte Weise ein- oder zweistufig vorgenomen werden. Sie erfolgt im allgemeinen durch Erhitzen auf Temperaturen zwischen 60 °C und 200 °C, insbesondere zwischen 80 °C und 180 °C.

Gegenstand der Erfindung sind weiterhin die vernetzten Produkte erhältlich durch Härtung einer erfindungsgemässen Zusammensetzung.

Überraschenderweise führt der Zusatz der drei Siloxan-Komponenten in den erfindungsgemässen Zusammensetzungen im Vergleich zu den entsprechenden unmodifizierten Systemen zu keiner oder nur zu einer geringen Verschlechterung in den mechanischen und elektrischen Eigenschaften der gehärteten Produkte. In Bezug auf die Zähigkeit sind die erfindungsgemässen Systeme sogar überlegen, was in einer wesentlich höheren Bruchenergie G_{1C} und einem höheren kritischen Spannungsintensitätsfaktor K_{1C} zum Ausdruck kommt.

Der Zusatz von Siliconen führt im allgemeinen zu einer Verschlechterung der Haftungseigenschaften. Die erfindungsgemässen Zusammensetzungen zeigen dennoch unerwarteterweise eine gute Haftung auf Metall, was sich in unverändert guten Umbruchkraft-Werten ausdrückt.

Von besonderem Interesse ist das excellente Hydrophobie-Verhalten der erfindungsgemässen Systeme. So ist nicht nur das gehärtete Epoxidharzgemisch wesentlich hydrophober als ein vergleichbares unmodifiziertes Harz; die Hydrophobie-Eigenschaft wird auch auf eine auf das gehärtete Produkt aufgebrachte Fremdschicht übertragen (sogenannter "Hydrophobie-Transfer-Effekt"). Dadurch wird auch eine anfänglich hydrophile Schmutzschicht hydrophob, und der Kontakt mit Wasser (z.B. bei Regen) führt nicht wie im Fall des unmodifizierten System zur Bildung einer leitfähigen Schmutz/Wasser-Schicht.

Die erfindungsgemässen Zusammensetzungen eignen sich besonders als Giessharze, Laminierharze, Pressmassen, Beschichtungsmassen sowie insbesondere als elektrische Isoliermassen.

Die Verwendung der erfindungsgemässen Zusammensetzung als elektrischer Isolator stellt einen weiteren Erfindungsgegenstand dar.

In den nachfolgenden Beispielen werden die folgenden kommerziell erhältlichen Substanzen eingesetzt:
- Epoxidharz 1:: Hexahydrophthalsäurediglycidylester (Epoxidzahl: 5,6-6,2 val/kg)
- Härter 1: Härtermischung aus 70,0 Gew.-Teilen Hexahydrophthalsäureanhydrid und 30,0 Gew.-Teilen Methylhexahydrophthalsäureanhydrid
- Silbond W 12 EST:: mit Epoxysilan vorbehandeltes Quarzmehl (Quarzwerke Frechen)
- Polysiloxan 1:: OH-terminiertes Polydimethylsiloxan mit einer Viskosität von 5 Pa · s (Hüls AG)
- NM 4205: polyethermodifiziertes Silicon aus Polydimethylsiloxan-Hauptketten mit Trimethylsiloxy-Endgruppen und Polyether-Seitenketten mit Polyethylenoxid/Polypropylenoxid-Copolymeren und Butoxy-Endgruppen; Molekularmasse: 14000 g/mol, Viskosität: 800±250 mPa · s (Hüls AG)

### Beispiel 1:

In einem Mischgerät mit Disperserscheibe werden 9550 g Epoxidharz 1, 150 g Polysiloxan 1, 150 g NM 4205 und 150 g Dodecamethylcyclohexasiloxan eingewogen und bei Raumtemperatur in einer Stunde bei 3000 U/min gemischt. Die Mischung wird anschliessend 10 min in einem Vakuum von ca. 10 mbar unter Rühren entgast. Dabei entsteht eine weisse Emulsion.
1000 g der so hergestellten Harzvormischung wird mit 860 g Härter 1, 4,8 g Benzyldimethylamin und 3620 g Quarzmehl Silbond W 12 EST innerhalb von 30 min bei 60 °C mittels eines Mischers mit Flügelrührwerk vermischt und anschliessend bei ca. 10 mbar kurz entgast.
Die Zusammensetzung wird dann 6 h bei 80 °C und 10 h bei 140 °C gehärtet. Die Eigenschaften des gehärteten Produkts sind in Tabelle 1 zusammengefasst.

### Vergleichsbeispiel 1:

1000 g Hexahydrophthalsäurediglycidylester (Epoxidzahl: 5,6-6,2 val/kg) wird mit 900 g einer Härtermischung aus 70,0 Gew.-Teilen Hexahydrophthalsäureanhydrid und 30,0 Gew.-Teilen Methylhexahydrophthalsäureanhydrid, 5,0 g Benzyldimethylamin und 3700 g eines silanisierten Quarzmehls innerhalb von 30 min bei 60 °C mittels eines Mischers mit Flügelrührwerk vermischt und anschliessend bei ca. 10 mbar kurz entgast.
Die Zusammensetzung wird dann 6 h bei 80 °C und 10 h bei 140 °C gehärtet. Die Eigenschaften des gehärteten Produkts sind in Tabelle 1 zusammengefasst.

### Applikationsbeispiel 1:

Mittels des Druckgelierverfahrens werden Stützisolatoren hergestellt. Dazu werden die nach Beispiel 1 und Vergleichsbeispiel 1 hergestellten ungehärteten Mischungen in eine auf 140 °C aufgeheizte, mit Trennmittel behandelte, Metallform eingespritzt. Nach Gelieren (nach ca. 20 min.) wird das Gussteil aus der Form genommen und 10 h bei 140 °C nachgehärtet. Der aus der erfindungsgemässen Zusammensetzung hergestellte Isolator weist unerwarteterweise eine höhere Umbruchkraft auf als der aus der analogen Zusammensetzung ohne Silicon-Additive hergestellte Isolator auf (siehe Tabelle 1).

### Applikationsbeispiel 2:

Das bessere Verhalten der mit dem erfindungsgemäss modifizierten System hergestellten Isolatoren in Atmosphären mit hoher Luftverschmutzung, insbesondere die besseren Hydrophobieeigenschaften, zeigen die folgenden Versuche:
Proben des nach Beispiel 1 und Vergleichsbeispiel 1 hergestellten Materials werden in Anlehnung an DIN 53364 auf Hydrophobie untersucht. Dazu wird eine Testflüssigkeit (Ethylenglykolmonoethylether + Farbstoff) mit einer Oberflächenspannung von 30 dyn/cm auf die vorher mit Ethanol gereinigten Proben mit Hilfe eines kleinen Haarpinsels aufgetragen. Bei der erfindungsgemässen Probe zieht sich der aufgetragene Film der Testtinte augenblicklich zusammen, während beim Vergleichssystem ohne Silicon-Additive die Flüssigkeit wesentlich länger als die geforderten 2 Sekunden haftet. Dies zeigt, dass das erfindungsgemäss modifizierte System eine geringere Oberflächenenergie aufweist, d.h. eindeutig hydrophober ist.
Zum Nachweis des sogenannten "Hydrophobie-Transfer-Effekts" wird auf zwei Platten des nach Beispiel 1 und Vergleichsbeispiel 1 hergestellten Materials (ohne Verwendung siliconhaltiger Trennmittel hergestellt und nach dem Entformen mit Ethanol gereinigt) eine künstliche Verschmutzung aufgebracht. Eine Suspension aus 90 % Wasser und10 % Aluminiumhydroxid wird mit einer Schichtdicke von ca. 1 mm auf die Probe aufgetragen. Nach dem Sedimentieren des Feststoffs wird das überstehende Wasser mit einer Pipette entfernt. Nach 3 Tagen Trocknen bei Raumtemperatur wird aus einer Pipette ein Wassertropfen auf die Fremdschicht aufgebracht. Beim Vergleichssystem (Mischung aus Vergleichsbeispiel 1) verläuft der Wassertropfen augenblicklich in der Fremdschicht aus Aluminiumhydroxid, während beim erfindungsgemäss modifizierten System (Mischung aus Beispiel 1) die Tropfen auf der Fremdschicht liegenbleiben bzw. beim Schrägstellen der Probe abrollen.

**Tabelle 1:**

| | Beispiel 1 | Vergleichsbeispiel 1 |
|---|---|---|
| Epoxidharz 1 [Gew.-Teile] | 95,5 | 100 |
| Polysiloxan 1 [Gew.-Teile] | 1,5 | |
| NM 4205 [Gew.-Teile] | 1,5 | |
| Dodecamethylcyclohexasiloxan [Gew.-Teile] | 1 ,5 | |
| Härter 1 [Gew.-Teile] | 86 | 90 |
| Silbond W 12 EST [Gew.-Teile] | 362 | 370 |
| Füllstoffgehalt | 66 % | 66 % |
| Wärmeausdehnungskoeffizient [ppm/K] | 32,3 | 33,1 |
| Zugfestigkeit [MPa] | 84 | 89 |
| Bruchdehnung [%] | 1,2 | 1,1 |
| Elastizitätszugmodul [MPa] | 11124 | 11632 |
| Biegefestigkeit [MPa] | 151 | 156 |
| Randfaserdehnung [%] | 1,6 | 1,5 |
| Elastizitätsbiegemodul [MPa] | 11610 | 12211 |
| kritischer Spannungsintensitätsfaktor K_{1C} | 2,6 | 2,4 |
| [MPa·(m)^{1/2}] | | |
| Bruchenergie Gic [J/m²] | 544 | 437 |
| Kriechstromfestigkeit (CTI) | >600M-0,0 | >600M-0,0 |
| Lichtbogenfestigkeit (ASTM D495) [s] | 187/194 | 189/192 |
| Umbruchkraft [N] | 6120 | 5830 |
| Hydrophobie-Transfer-Effekt | ja | nein |
| Benetzbarkeit | nein | ja |
| Wasseraufnahme (10 d bei 23 °C) | 0,12 % | 0,12 % |
| Gewichtsverlust nach 10 d bei 200 °C | 1,09 | 1,01 |

## Patentansprüche

1. Zusammensetzung enthaltend
(a) ein cycloaliphatisches Epoxidharz,
(b) ein OH-terminiertes Polysiloxan,
(c) ein PolysiloxanlPolyether-Copolymer und
(d) ein cyclisches Polysiloxan.

2. Zusammensetzung nach Anspruch 1, enthaltend, bezogen auf die Gesamtzusammensetzung, 94,0-99,7 Gew.-% der Komponente (a), 0,1-2,0 Gew.-% der Komponente (b), 0,1-2,0 Gew.-% der Komponente (c) und 0,1-2,0 Gew.-% der Komponente (d), wobei die Summe der Komponenten (a), (b), (c) und (d) 100 Gew.-% beträgt.

3. Zusammensetzung nach Anspruch 1, enthaltend als Komponente (a) Hexahydrophthalsäurediglycidylester oder 3,4-Epoxycyclohexylmethyl-3'4'-epoxycyclohexancarboxylat.

4. Zusammensetzung nach Anspruch 1, enthaltend als Komponente (b) ein Polysiloxan der Formel I 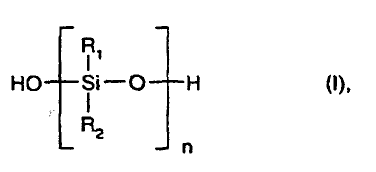 worin R₁ und R₂ unabhängig voneinander C₁-C₁₈-Alkyl, C₅-C₁₄-Aryl oder C₆-C₂₄-Aralkyl bedeuten und n für einen Durchschnittswert von 3 bis 60 steht.

5. Zusammensetzung nach Anspruch 4, enthaltend als Komponente (b) ein Polysiloxan der Formel I, worin R₁ und R₂ unabhängig voneinander Methyl, Ethyl oder Phenyl bedeuten.

6. Zusammensetzung nach Anspruch 4, enthaltend als Komponente (b) ein Polysiloxan der Formel I, worin R₁ und R₂ für Methyl stehen.

7. Zusammensetzung nach Anspruch 1, enthaltend als Komponente (c) ein Copolymer enthaltend Polydimethylsiloxan als Polysiloxan-Segment.

8. Zusammensetzung nach Anspruch 1, enthaltend als Komponente (c) ein Copolymer enthaltend Polyethylenoxid, Polypropylenoxid oder ein Polyethylenoxid/Polypropylenoxid-Copolymer als Polyether-Segment.

9. Zusammensetzung nach Anspruch 1, enthaltend als Komponente (d) ein cyclisches Polysiloxan der Formel II 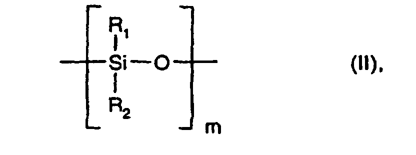 worin R₁ und R₂ unabhängig voneinander C₁-C₁₈-Alkyl, C₅-C₁₄-Aryl oder C₆-C₂₄-Aralkyl bedeuten und m eine ganze Zahl von 4 bis 12 ist.

10. Zusammensetzung nach Anspruch 9, enthaltend als Komponente (d) ein cyclisches Polysiloxan der Formel II, worin R₁ und R₂ unabhängig voneinander Methyl, Ethyl oder Phenyl bedeuten und m eine ganze Zahl von 4 bis 6 ist.

11. Zusammensetzung nach Anspruch 9, enthaltend als Komponente (d) Octamethylcyclotetrasiloxan, Decamethylcyclopentasiloxan oder Dodecamethylcyclohexasiloxan.

12. Zusammensetzung nach Anspruch 1, enthaltend zusätzlich als Komponente (e) ein Polycarbonsäureanhydrid.

13. Vernetzte Produkte erhältlich durch Härtung einer Zusammensetzung gemäss Anspruch 12.

14. Verwendung einer Zusammensetzung nach Anspruch 1 als elektrischer Isolator.

## Claims

1. A composition, which comprises
(a) a cycloaliphatic epoxy resin,
(b) an OH-terminated polysiloxane,
(c) a polysiloxane/polyether copolymer, and
(d) a cyclic polysiloxane.

2. A composition according to claim 1, which comprises, based on the entire composition, 94.0-99.7 % by weight of component (a), 0.1-2.0 % by weight of component (b), 0.1-2.0 % by weight of component (c), and 0.1-2.0 % by weight of component (d), the sum of components (a), (b), (c) and (d) being 100 % by weight.

3. A composition according to claim 1, wherein component (a) is hexahydrophthalic diglycidyl ester or 3,4-epoxycyclohexylmethyl-3'4'-epoxycyclohexanecarboxylate.

4. A composition according to claim 1, wherein component (b) is a polysiloxane of formula I 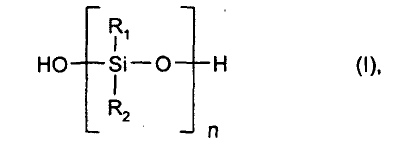 wherein R₁ and R₂ are each independently of the other C₁-C₁₈alkyl, C₅-C₁₄aryl or C₆-C₂₄aralkyl, and n is an average value of 3 to 60.

5. A composition according to claim 4, wherein component (b) is a polysiloxane of formula I, wherein R₁ and R₂ are each independently of the other methyl, ethyl or phenyl.

6. A composition according to claim 4, wherein component (b) is a polysiloxane of formula I, wherein R₁ and R₂ are methyl.

7. A composition according to claim 1, wherein component (c) is a copolymer comprising polydimethylsiloxane as polysiloxane segment.

8. A composition according to claim 1, wherein component (c) is a copolymer comprising polyethylene oxide, polypropylene oxide or a polyethylene oxide/polypropylene oxide copolymer as polyether segment.

9. A composition according to claim 1, wherein component (d) is a cyclic polysiloxane of formula II 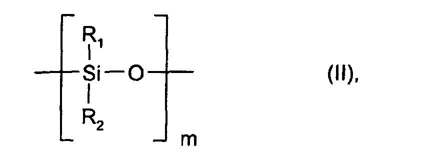 wherein R₁ and R₂ are each independently of the other C₁-C₁₈alkyl, C₅-C₁₄aryl or C₆-C₂₄aralkyl, and m is an integer from 4 to 12.

10. A composition according to claim 9, wherein component (d) is a cyclic polysiloxane of formula II, wherein R₁ and R₂ are each independently of the other methyl, ethyl or phenyl, and m is an integer from 4 to 6.

11. A composition according to claim 9, wherein component (d) is octamethylcyclotetrasiloxane, decamethylcyclopentasiloxane or dodecamethylcyclohexasiloxane.

12. A composition according to claim 1, which additionally comprises as component (e) a polycarboxylic acid anhydride.

13. A crosslinked product obtainable by curing a composition according to claim 12.

14. Use of a composition according to claim 1 as electric insulator.

## Revendications

1. Composition contenant :
(a) une résine époxyde cycloaliphatique,
(b) un polysiloxane à terminaison OH,
(c) un copolymère polysiloxane/polyéther et
(d) un polysiloxane cyclique.

2. Composition selon la revendication 1, contenant, rapporté à la composition globale, de 94,0 à 99,7 % en poids du composant (a), de 0,1 à 2,0 % en poids du composant (b), de 0,1 à 2,0 % en poids du composant (c) et de 0, 1 à 2,0 % en poids du composant (d), la somme des composants (a), (b), (c) et (d) s'élevant à 100 % en poids.

3. Composition selon la revendication 1, contenant comme composant (a) l'ester diglycidylique d'acide hexahydrophtalique ou le carboxylate de 3,4-époxy-cyclohexylméthyl-3',4'-époxycyclohexane.

4. Composition selon la revendication 1, contenant comme composant (b) un polysiloxane de formule I 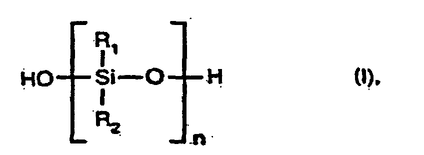 dans laquelle R₁ et R₂ représentent indépendamment l'un de l'autre un alkyle en C₁ à C₁₈, aryle en C₅ à C₁₄ ou aralkyle en C₆ à C₂₄ et n représente une valeur moyenne de 3 à 60.

5. Composition selon la revendication 4, contenant comme composant (b) un polysiloxane de formule I, dans laquelle R₁ et R₂ représentent indépendamment l'un de l'autre un méthyle, éthyle ou phényle.

6. Composition selon la revendication 4, contenant comme composant (b) un polysiloxane de formule I, dans laquelle R₁ et R₂ représentent le méthyle.

7. Composition selon la revendication 1, contenant comme composant (c) un copolymère contenant un polydiméthylsiloxane comme segment polysiloxane.

8. Composition selon la revendication 1, contenant comme composant (c) un copolymère contenant un polyoxyde d'éthylène, un polyoxyde de propylène ou un copolymère de polyoxyde d'éthylène/polyoxyde de propylène comme segment polyéther.

9. Composition selon la revendication 1, contenant comme composant (d) un polysiloxane cyclique de formule II 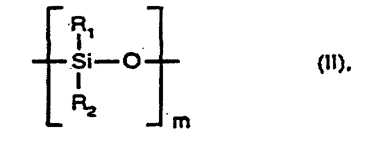 dans laquelle R₁ et R₂ représentent indépendamment l'un de l'autre un alkyle en C₁ à C₁₈, aryle en C₅ à C₁₄ ou aralkyle en C₆ à C₂₄ et m est un nombre entier de 4 à 12.

10. Composition selon la revendication 9, contenant comme composant (d) un polysiloxane cyclique de formule II, dans laquelle R₁ et R₂ représentent indépendamment l'un de l'autre un méthyle, éthyle ou phényle et m est un nombre entier de 4 à 6.

11. Composition selon la revendication 9, contenant comme composant (d) l'octaméthylcyclotétrasiloxane, le décaméthylcyclopentasiloxane ou le dodécaméthylcyclohexasiloxane.

12. Composition selon la revendication 1, contenant de plus comme composant (e) un anhydride d'acide polycarboxylique.

13. Produits réticulés pouvant être obtenus par durcissement d'une composition selon la revendication 12.

14. Utilisation d'une composition selon la revendication 1 comme isolant électrique.
